# EUROPEAN PATENT SPECIFICATION

(11) **EP 2 151 400 B1**
(45) Date of publication and mention of the grant of the patent: **29.08.2012**
(21) Application number: 08020554.5
(22) Date of filing: 26.11.2008
(51) Int. Cl.: B65G 53/56

(54) **Passage changing device**
Durchgangsänderungsvorrichtung
Dispositif de changement de passage

(30) Priority: 06.08.2008 JP 2008202693
(43) Date of publication of application: 10.02.2010
(73) Proprietor: Okabe, Shuichi, Saitama-ken (JP)
(72) Inventor: Okabe, Shuichi, Saitama-ken (JP)
(74) Representative: Hano, Christian

(56) References cited:
- GB-A- 2 330 397
- US-A- 3 146 033
- US-A- 4 938 637

## Description

### BACKGROUND OF THE INVENTION

### 1. Field of the Invention

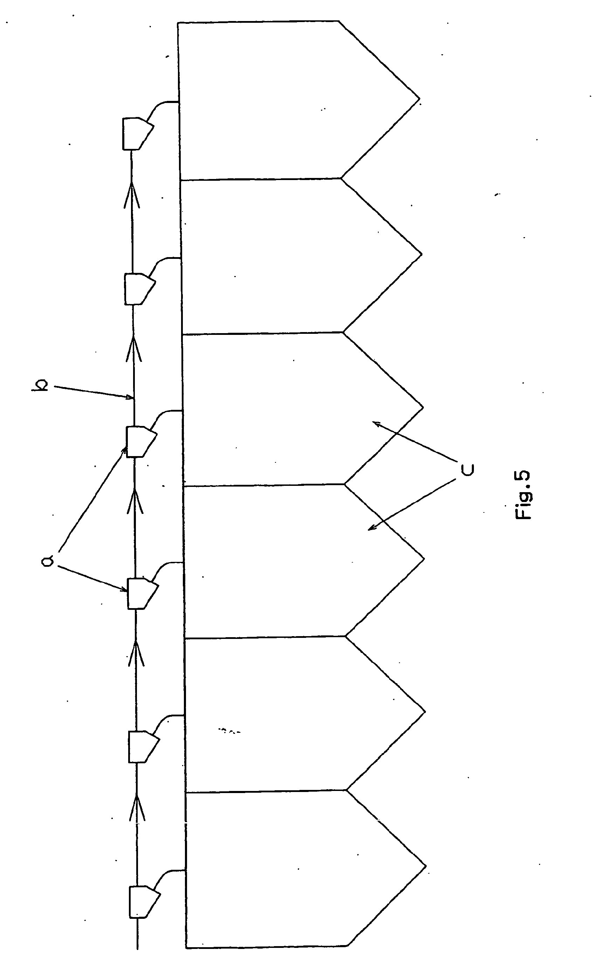

The present invention relates to a passage changing device for a powder or particle transportation system using a compressed gas flow from a source to multiple delivery points, such as receiving hoppers. Devices of this kind are usually arranged in a series of pipe lines and provided above each receiving hopper one by one, as shown in Fig. 5. When one hopper is filled up with powder, the passage changing device above that hopper is diverted and the supply of powder is stopped. Then the next passage changing device is diverted and powder is introduced into the next empty hopper.

In particular the present invention relates to a passage changing device according to the preamble of claim 1.

### 2. Description of the Related Art

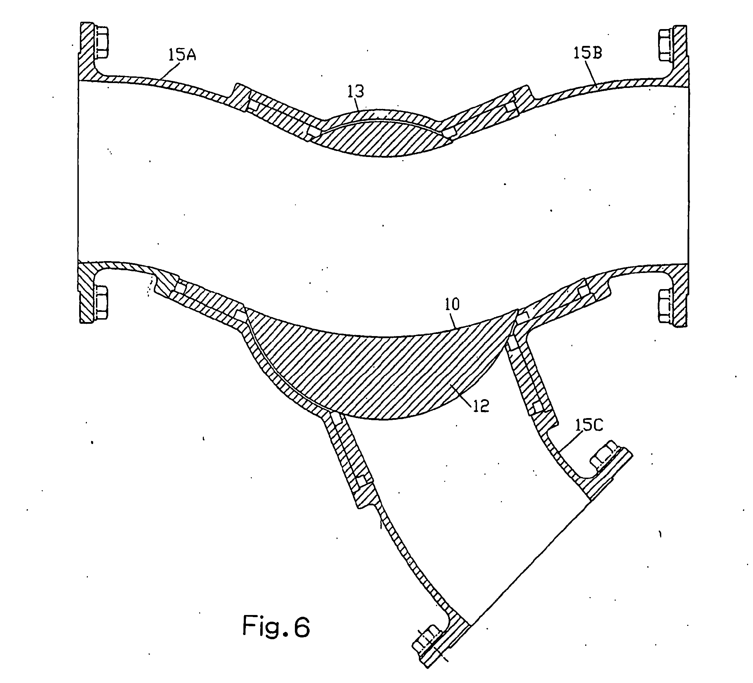

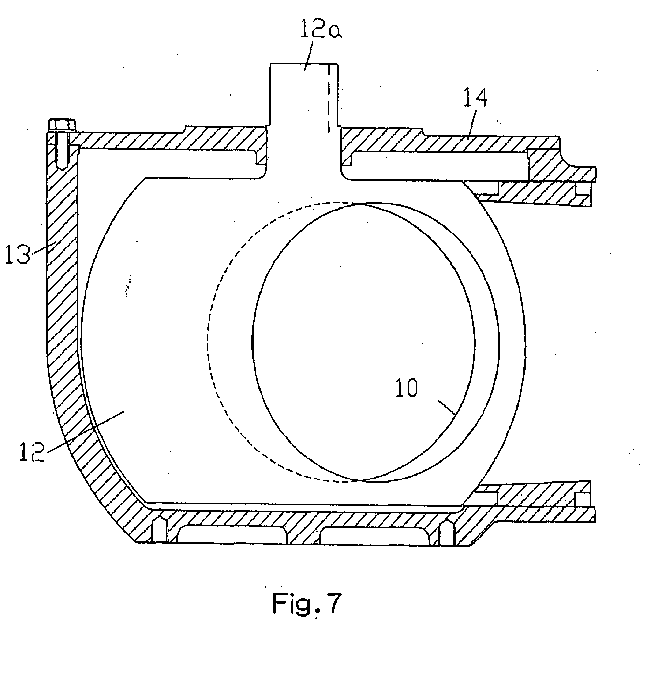

With respect to a passage changing device for a powder transportation system, a ball valve as shown in Fig. 6 - 9 is used conventionally. This ball valve has a body casing 13 and a ball disk 12 located in the body casing 13. The ball disk 12 is rotated by a stem 12a that sticks out outward and is connected to an operating device such as a motor, an air actuator or an air cylinder.

The ball disc 12 has a curved passage 10 in it. The body casing 13 has three branches consisting of an inlet branch 15A, a first outlet branch 15B and a secondary outlet branch 15C. These three branches 15A, 15B, 15C are connected with the body casing 13 by bolts.

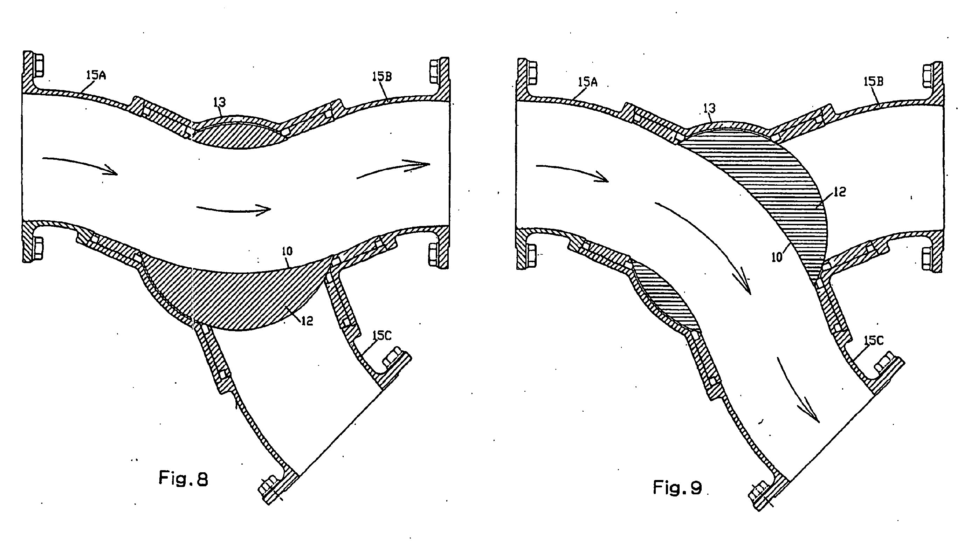

Fig. 8 shows the incipient stage at which the passage 10 of the ball disk 12 connects the inlet branch 15A and the first outlet branch 15B. Fig. 9 shows the stage after turning of the ball disc 12, at which the passage 10 connects the inlet branch 15A and the secondary outlet branch 15C. Thus, the passage of a powder with compressed gas is changed.

However, there are two big problems as to conventional ball valves.
1) The powder with the gas passes through many ball valves from a source to a certain hopper and is collided with an inner wall of the ball valves twice per one ball valve because of a curve at the passage 10 in the ball disc 12 and a curve at the outlet branches 15B or 15C. Usually a number of valves are provided in line, so the more valves there are, the more collisions occur.
   In case of particle transportation, such as rice, for example, this causes cracking of the rice particles, and damaged rice is treated as low-grade quality, resulting in economical loss.
   In case of adherent powder transportation, such as calcium hydroxide, the powder sticks to inner wall of the ball valve and causes great energy loss. In severe cases, plugging of the passage happens and the operation of a plant is forced to be stopped.
2) The inside pressure of a transportation system is kept higher than the atmospheric pressure. To prevent leakage from the inside to the outside, seal rings are provided between the ball disc 12 and each of the branches 15A, 15B, 15C. However, the tolerance for out-of-roundness of the ball disc is normally 0.02 mm.
   Even if special machining is applied in the most experienced company, 0.005 mm is the limit and it is almost impossible for other companies at the present time.

In case of soft powder transportation, a plastic seal ring is used. But if the plastic seal ring is too soft, instantly wearing of the seal rings occurs. So a certain level of hardness is required for the seal rings and such seal rings should be strongly forced onto the surface of the ball disk 12 using the elasticity of the plastic material to minimize the leakage. This means that a strong force to deform the packing is needed and a large torque to rotate the ball disc 12 is required. Accordingly, a large and expensive operating device is necessary.

In case of a very hard powder, such as polycarbonate, the plastic packing cannot be used because the set rings are early worn out. So seat rings made of metal are used instead of a plastic packing. However, the amount of leak gas is increased because the metal seat ring is not flexible and it is difficult to reduce the clearance between the ball disc and the seat ring due to the limitation of machining accuracy for the ball disc, as described above.

US 3 146 033 A discloses a passage changing device according to the preamble of claim 1, comprising a casing having a shape like a megaphone and sandwiched between a front cover and a rear cover, and an inner tube enclosed in the casing and rotatable in an oscillating movement. The inner tube has inlet and outlet flanges rectangular to the rotating axis of the inner tube, and a groove at the outlet flange. The passage of the inner tube has an inclined angle to the rotating axis thereof. The front cover has an inlet opening and an outlet flange in which a groove is provided. The front cover, the casing and the rear cover are tightened up by connecting bolts. The rear cover has a first outlet pipe and a second outlet pipe and a flange to which an axle journal is mounted which is equipped with a handle for turning and positioning the inner tube. By rotating the inner tube the passage of the inner tube can be brought in a first position in which it is in straight line with the passage of the first outlet pipe and in a second position in which it is in straight line with the passage of the second outlet pipe.

The object underlying the present invention is to provide a passage changing device that can solve the essential problems of the conventional passage changing device for a powder transportation system described above and is usable not only for a powder transportation system but also for other fluid transportation systems.

This object is attained by a passage changing device comprising the features of claim 1. Preferred embodiments of the passage changing device of the present invention are claimed in claims 2 to 5.

According to the present invention a straight passage through the passage changing device is provided instead of curved passage.

Further a flat sliding surface is provided where sealing of powder and gas is necessary instead of three dimensional surfaces.

### BRIEF DESCRIPTION OF THE DRAWINGS

Fig. 1 is an exploded view showing the main parts of a passage changing device of the present invention;
Fig. 2 shows a view similar to Fig. 1, an inner tube being inserted in a casing;
Fig.3 shows a plain view of the passage changing device of Fig. 1 in an assembled state;
Fig.4 shows a side view of the passage changing device Fig. 1 in an assembled state;
Fig.5 shows a typical layout of the present invention in an actual plant;
Fig.6 and 7 show sectional views of a known passage changing device comprising a ball valve;
Fig. 8 shows an initial stage of the known passage changing device;
Fig. 9 shows second stage of the known passage changing device.

### DETAILED DESCRIPTION OF THE PREFFERRED EMBODIMENT

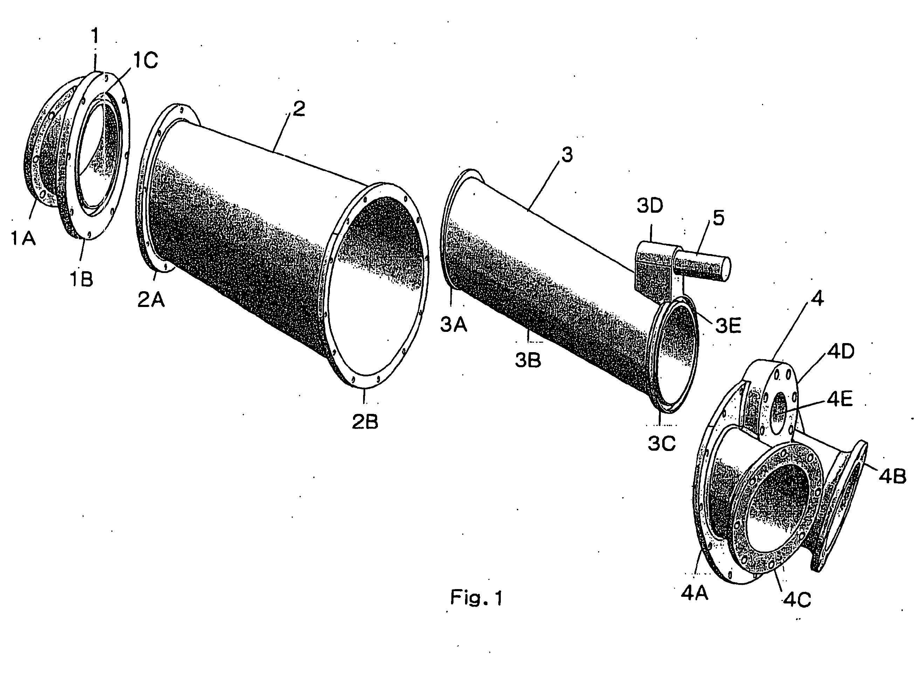

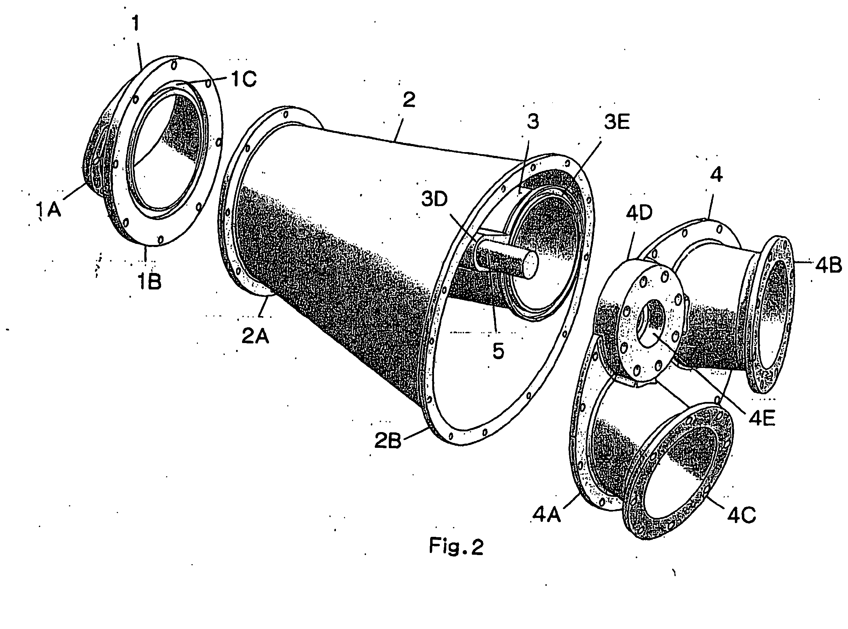

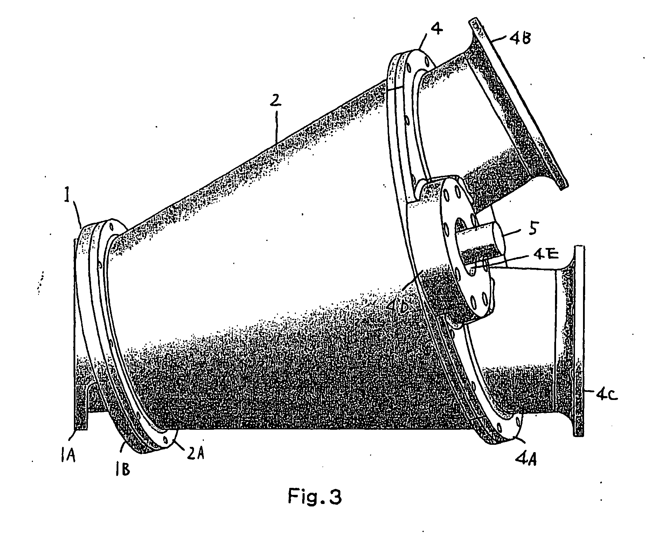

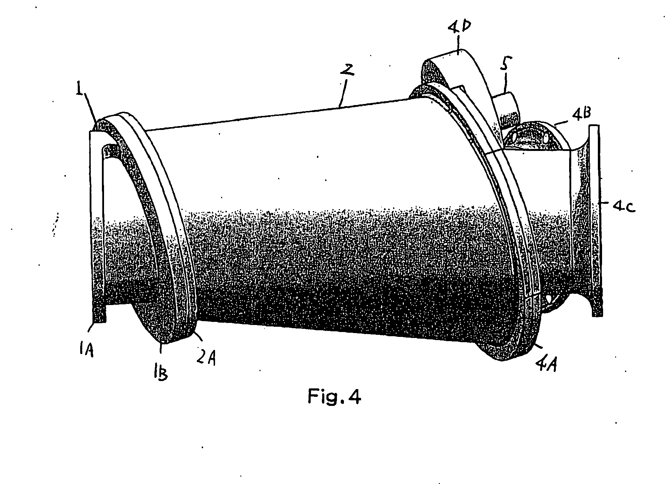

As shown in Fig. 1 to 4 the passage changing device of the present invention comprises an inner tube 3 which is enclosed in a casing 2 having a shape like a megaphone. The inner tube 3 is sandwiched between a front cover 1 and a rear cover 4.

The inner tube 3 can be rotated via a rib 3D formed at the external wall 3B of the inner tube 3 and comprising a hole in which a stem 5 is iserted which is fixed to an actuator located outside of the casing 2.

The passage or through opening of the inner tube 3 is inclined to the rotating axis of the inner tube 3. The center of an inlet flange 3A of the inner tube 3 lies on the rotating axis, whereas the center of an outlet flange 3C of the inner tube 3 is apart or offset from the rotating axis. Both flanges 3A,3B are rectangular to the rotating axis of the inner tube 3. An inlet side flange 2A and an outlet side flange 2B of the casing 2 are rectangular to the rotating axis. The rear cover 4 comprises two outlet pipes 4B,4C and a flange 4D in which the hole 4E is formed and on which the actuator can be installed. The front cover 1 has an inlet flange 1A that is inclined to an outlet flange 1B. The front cover 1 and the rear cover 4 are tightened up by bolts at the outlet flange1B of the front cover 1 and the inlet flange 4A of the rear cover4.

In order to attain the above object, according to a first aspect of the present invention, there are provided a straight passage of the inner tube 3 and flanges rectangular to a straight passage of the pipe line.

One of the two outlet pipes 4B, 4C of the rear cover 4 is selected as a straight passage of the pipe line depending on the pipe line layout by a client. The other one is for a branched passage.

For example, if the outlet pipe 4B is selected as the straight line of the pipe line, the inlet flange 1A of the front cover 1 is adjusted by changing the position of bolt holes at the outlet flange 1B of the front cover 1 to make the inlet flange 1A rectangular to the straight passage line. The flange of the outlet pipe 4B of the rear cover 4 is made to be rectangular to the straight passage line. So all passages of the front cover 1, the inner tube 3 and the outlet pipe 4B are straight, and flanges 1A and 4B are rectangular to the straight line.

If the outlet pipe 4C is selected as the straight line of the pipe work, the front cover 1 is turned by 90 degrees through adjusting bolt holes, and the flange 1A and the flange 4C become rectangular to the straight line of the pipe work. Accordingly, a collision or an adhesion of powder or particles as described above can be avoided.

According to a second aspect of the present invention, there is provided a flat sliding surface between the outlet flange 3C of the inner tube 3 and the flange 4A of the rear cover 4, and between the outlet flange 1B and the inlet flange 3A.

Moreover, it is easy and no problem to seal between fixed surfaces without sliding such as;
between the outlet flange 1B and the inlet side flange 2A, and
between the outlet side flange 2B and the inlet flange 4A, and
between the flange 4D and a mating flange of an actuator.

The inner tube 3 is rotated with an oscillating angle of approximately 90 degrees via the rib 3D and the stem 5. The stem 5 passes through the hole 4E of the flange 4D and is sealed by packing not shown in the drawing, and connected with an actuator located outside of the casing.

Plastic seal rings or metal seat rings, selected depending on the requirement for hardness, are provided in the a groove 3E at the outlet flange 3C of the inner tube 3 and in a groove 1C at the outlet flange 1B of front cover 1. In case of a metal seat, back up O-rings are laid behind the metal seats to give pushing force for the metal seats to the sliding surfaces.

The inlet flange 3A of the inner tube 3 turns circularly about the rotating axis and does not move to the radial direction. This means that there is little intrusion of powder into the clearance between the contacting surfaces. Furthermore, the contacting surfaces can be machined accurately because there is a narrow area, so no big pushing force for a metal seal ring or a plastic seal ring is necessary, and there is little friction force.

The outlet flange 3C turns by 90 degrees about the rotating axis, keeping a certain distance from the rotating axis. So the traveling distance of the flange 3C against the flange 4A is large. However, the surface of the flange 4A is flat, and is very easy to be machined and/or grinded accurately without any particular expensive machining. Also the surfaces of the metal seal ring or the plastic seal ring are very easy to be machined because their shapes are so simple and their sizes are so small. Thus, without the help of plastic material, ideal flat surfaces are obtained economically, and the amount of leakage gas is reduced drastically. Furthermore, there is only one sliding point in the present invention compared with the ball valve that has three sliding points, causing much friction force and abrasion. Therefore, theoretically the torque required to turn the valve disk of this present invention is one third of that of the ball valve, considering only the numbers of sliding points. Furthermore, the pushing force to the metal seal rings or the plastic seal rings can be much reduced because of the flat machined surfaces. This means that the torque for an actuator to operate the present invention is much less than in the case of a conventional ball valve. So the size becomes more compact, the cost becomes much lower for actuator, and the life of seal rings become longer.

Fig. 5 shows a typical layout of the present invention wherein reference numeral a indicates the passage changing devices, reference numeral b indicates pipe lines and reference numeral c indicates the hoppers.

## Claims

1. A passage changing device for a powder or particle transportation system using a compressed gas flow comprising
a casing (2) having a shape like a megaphone and sandwiched between a front cover (1) and a rear cover (4), and
an inner tube (3) enclosed in the casing (2) and rotatable in an oscillating movement,
the inner tube (3) having inlet and outlet flanges (3A; 3C) rectangular to the rotating axis of the inner tube (3), and a groove (3E) at the outlet flange (3C), the passage of the inner tube (3) having an inclined angle to the rotating axis thereof,
the front cover (1) having an inlet flange (1A) and an outlet flange (1B) in which a groove (1C) is provided,
the rear cover (4) having a first outlet pipe (4B) and a second outlet pipe (4C) and a flange (4D) for installing an actuator,
the front cover (1), the casing (2) and the rear cover (4) being tightened up by connecting bolts, and
a stem (5) being inserted into a rib (3D) provided at the external wall of the inner tube (3) and connected with the actuator located outside,
wherein by rotating the inner tube (3) the passage of the inner tube (3) can be brought in a first position in which it is in straight line with the passage of the first outlet pipe (4B) and in a second position in which it is in straight line with the passage of the second outlet pipe (4C),
**characterized in that**
the front cover (1) is formed and adapted to be adjusted such that the inlet flange (1A) thereof is rectangular to the straight passage line, when the inner tube (3) is in the first position and when the inner tube (3) is in the second position.

2. A passage changing device according to claim 1, wherein seal rings made of metal and/or plastic are mounted in the groove (1C) of the outlet flange (1B) of the front cover (1), and in the groove (3E) of the outlet flange (3C) of the inner tube (3).

3. A passage changing device according to claim 1, wherein the center of the inlet flange (3A) of the inner tube (3) lies on the rotating axis, and the center of the outlet flange (3C) of the inner tube (3) is apart from the rotating axis.

4. A passage changing device according to claim 1, wherein the inlet flange (1A) of the front cover (1) is rectangular to the passage of the inner tube (3), and the outlet flange (1B) of the front cover (1) is rectangular to the rotating axis of the inner tube (3).

5. A passage changing device according to claim 1, wherein the numbers of holes for tying bolts in the outlet flange (1B) of the front cover (1) are multiple numbers of four in case that the rotating angle in the oscillating movement is 90 degrees, or multiple numbers of 3 in case that the rotating angle in the oscillating movement is 60 degrees.

## Patentansprüche

1. Durchgangsänderungsvorrichtung für ein Pulver- oder Partikel-Transportsystem unter Verwendung einer Druckgasströmung mit
- einem Gehäuse (2), das die Form eines Megafons aufweist und sandwichartig zwischen einer vorderen Abdeckung (1) und einer hinteren Abdeckung (4) angeordnet ist; und
- einem Innenrohr (3), das in dem Gehäuse (2) eingeschlossen und in einer Hinund Herbewegung drehbar ist,
- wobei das Innenrohr (3) einen Einlass- und einen Auslassflansch (3A; 3C), die rechtwinklig zu der Drehachse des Innenrohrs (3) sind, und eine Nut (3E) an dem Auslassflansch (3C) aufweist, wobei der Durchgang des Innenrohrs (3) einen geneigten Winkel zu seiner Drehachse aufweist;
- wobei die vordere Abdeckung (1) einen Einlassflansch (1A) und einen Auslassflansch (1 B) aufweist, in dem eine Nut (1 C) vorgesehen ist;
- wobei die hintere Abdeckung (4) ein erstes Auslassrohr (4B) und ein zweites Auslassrohr (4C) und einen Flansch (4D) zum Installieren eines Stellglieds aufweist;
- wobei die vordere Abdeckung (1), das Gehäuse (2) und die hintere Abdeckung (4) durch Befestigungsbolzen festgezogen sind;
- wobei ein Schaft (5) in eine an der Außenwand des Innenrohrs (3) vorgesehene Rippe (3D) eingesetzt und mit dem außen angeordneten Stellglied verbunden ist;
- wobei durch Drehung des Innenrohrs (3) der Durchgang des Innenrohrs (3) in eine erste Position, in der er auf einer geraden Linie mit dem Durchgang des ersten Auslassrohrs (4B) liegt, und in eine zweite Position gebracht werden kann, in der er auf einer geraden Linie mit dem Durchgang des zweiten Auslassrohrs (4C) liegt;
**dadurch gekennzeichnet, dass**
- die vordere Abdeckung (1) so ausgebildet und angepasst ist, dass sie derart eingestellt werden kann, dass ihr Einlassflansch (1A) rechtwinklig zu der geraden Durchgangslinie ist, wenn sich das Innenrohr (3) in der ersten Position befindet und wenn sich das Innenrohr (3) in der zweiten Position befindet.

2. Durchgangsänderungsvorrichtung nach Anspruch 1, wobei Dichtungsringe aus Metall und/oder Kunststoff in der Nut (1 C) des Auslassflansches (1 B) der vorderen Abdeckung (1) und in der Nut (3E) des Auslassflansches (3C) des Innenrohrs (3) angebracht sind.

3. Durchgangsänderungsvorrichtung nach Anspruch 1, wobei der Mittelpunkt des Einlassflansches (3A) des Innenrohrs (3) auf der Drehachse liegt und der Mittelpunkt des Auslassflansches (3C) des Innenrohrs (3) von der Drehachse entfernt ist.

4. Durchgangsänderungsvorrichtung nach Anspruch 1, wobei der Einlassflansch (1A) der vorderen Abdeckung (1) rechtwinklig zu dem Durchgang des Innenrohrs (3) ist und der Auslassflansch (1 B) der vorderen Abdeckung (1) rechtwinklig zu der Drehachse des Innenrohrs (3) ist.

5. Durchgangsänderungsvorrichtung nach Anspruch 1, wobei die Anzahl von Löchern zum Verankern von Bolzen in dem Auslassflansch (1B) der vorderen Abdeckung (1) ein Vielfaches von Vier ist, falls der Drehwinkel in der Hin- und Herbewegung 90 Grad ist, oder ein Vielfaches von 3 ist, falls der Drehwinkel in der Hin- und Herbewegung 60 Grad ist.

## Revendications

1. Dispositif de changement de passage pour un système de transport de poudre ou de particules utilisant un courant de gaz comprimé comprenant une enveloppe (2) ayant une forme comme un mégaphone et prise en sandwich entre une pièce de recouvrement avant (1) et une pièce de recouvrement arrière (4), et
un tube intérieur (3) enfermé dans l'enveloppe (2) et rotatif dans un mouvement d'oscillation,
le tube intérieur (3) ayant des collerettes d'entrée et de sortie (3A ; 3C) perpendiculaires à l'axe de rotation du tube intérieur (3), et une rainure (3E) au niveau de la collerette de sortie (3C), le passage du tube intérieur (3) ayant un angle incliné par rapport à l'axe de rotation de celui-ci,
la pièce de recouvrement avant (1) ayant une collerette d'entrée (1A) et une collerette de sortie (1 B) dans laquelle une rainure (1 C) est prévue,
la pièce de recouvrement arrière (4) ayant un premier tuyau de sortie (4B) et un deuxième tuyau de sortie (4C) et une collerette (4D) pour installer un actionneur,
la pièce de recouvrement avant (1), l'enveloppe (2) et la pièce de recouvrement arrière (4) étant serrées par des boulons de raccordement, et
une tige (5) étant insérée dans une partie saillante (3D) prévue au niveau de la paroi externe du tube intérieur (3) et raccordée avec l'actionneur disposé à l'extérieur,
dans lequel, par la rotation du tube intérieur (3), le passage du tube intérieur (3) peut être amené dans une première position dans laquelle il est en ligne droite avec le passage du premier tuyau de sortie (4B) et dans une deuxième position dans laquelle il est en ligne droite avec le passage du deuxième tuyau de sortie (4C),
**caractérisé en ce que**
la pièce de recouvrement avant (1) est formée et adaptée à être ajustée de telle manière que la collerette d'entrée (1A) de celle-ci est perpendiculaire à la ligne droite de passage, lorsque le tube intérieur (3) est dans la première position et lorsque le tube intérieur (3) est dans la deuxième position.

2. Dispositif de changement de passage selon la revendication 1, dans lequel des bagues d'étanchéité constituées de métal et/ou de plastique sont montées dans la rainure (1 C) de la collerette de sortie (1B) de la pièce de recouvrement avant (1), et dans la rainure (3E) de la collerette de sortie (3C) du tube intérieur (3).

3. Dispositif de changement de passage selon la revendication 1, dans lequel le centre de la collerette d'entrée (3A) du tube intérieur (3) repose sur l'axe de rotation, et le centre de la collerette de sortie (3C) du tube intérieur (3) est à l'écart de l'axe de rotation.

4. Dispositif de changement de passage selon la revendication 1, dans lequel la collerette d'entrée (1A) de la pièce de recouvrement avant (1) est perpendiculaire au passage du tube intérieur (3), et la collerette de sortie (1 B) de la pièce de recouvrement avant (1) est perpendiculaire à l'axe de rotation du tube intérieur (3).

5. Dispositif de changement de passage selon la revendication 1, dans lequel les nombres de trous pour fixer des boulons dans la collerette de sortie (1 B) de la pièce de recouvrement avant (1) sont des nombres multiples de quatre dans le cas où l'angle de rotation dans le mouvement d'oscillation est de 90 degrés, ou des nombres multiples de 3 dans le cas où l'angle de rotation dans le mouvement d'oscillation est de 60 degrés.
